# EUROPÄISCHE PATENTANMELDUNG

(11) **EP 2 357 346 A1**
(43) Veröffentlichungstag der Anmeldung: **17.08.2011**
(21) Anmeldenummer: 10006377.5
(22) Anmeldetag: 19.06.2010
(51) Int. Cl.: F02D 41/40

(54) **Verfahren zum Betreiben einer Brennkraftmaschine mit Mehrfachverbrennung in einem Arbeitszyklus**

(30) Priorität: 06.11.2009 DE 102009052219
(71) Anmelder: Volkswagen Aktiengesellschaft, 38436 Wolfsburg (DE)
(72) Erfinder: Jeschke, Jens, Dr., 38106 Braunschweig (DE); Piewek, Jan, 39108 Magdeburg (DE); Nitzke, Hans-Georg, 38547 Wettmershagen (DE); Dockhorn, Matthias, 31234 Edemissen (DE)

(57) **Zusammenfassung**

Die Erfindung betrifft ein Verfahren zum Betreiben einer Brennkraftmaschine mit mindestens einem Arbeitszylinder, wobei in mindestens einem Arbeitszylinder in aufeinander folgenden Arbeitszyklen über einen vorbestimmten Kurbelwinkel pro Arbeitszyklus ein thermodynamischer Prozess mit jeweils einem Verbrennungsvorgang in jedem Arbeitszyklus ausgeführt wird, wobei jeder Verbrennungsvorgang mindestens zwei Einzelverbrennungen in einem Arbeitszyklus umfasst, wobei die Einzelverbrennungen zeitlich um einen Kurbelwinkel voneinander versetzt erfolgen. Hierbei wird jeweils ein Ist-Wert für den Energieinhalt und/oder ein Ist-Wert für die Lage getrennt jeweils für jede Einzelverbrennung innerhalb eines Arbeitszyklus bestimmt, wobei die Ist-Werte für den Energieinhalt der Einzelverbrennungen mit jeweiligen Soll-Werten für den Energieinhalt der jeweiligen Einzelverbrennung und der Ist-Wert für die Lage der jeweiligen Einzelverbrennungen innerhalb eines Arbeitszyklus mit jeweiligen Soll-Werten für die Lage der jeweiligen Einzelverbrennung innerhalb eines Arbeitszyklus verglichen werden, wobei in Abhängigkeit von jeweiligen Beträgen von Differenzen zwischen den Ist-Werten und den Soll-Werten vorbestimmte, die jeweilige Einzelverbrennung beeinflussende Parameter derart verändert werden, dass die Beträge von Differenzen zwischen den Ist-Werten und den Soll-Werten minimiert werden.

## Beschreibung

Die Erfindung betrifft Verfahren zum Betreiben einer Brennkraftmaschine mit mindestens einem Arbeitszylinder, wobei in mindestens einem Arbeitszylinder in aufeinander folgenden Arbeitszyklen über einen vorbestimmten Kurbelwinkel pro Arbeitszyklus ein thermodynamischer Prozess mit jeweils einem Verbrennungsvorgang in jedem Arbeitszyklus ausgeführt wird, wobei jeder Verbrennungsvorgang mindestens zwei Einzelverbrennungen in einem Arbeitszyklus umfasst, wobei die Einzelverbrennungen zeitlich um einen Kurbelwinkel voneinander versetzt erfolgen, gemäß dem Oberbegriff des Patentanspruchs 1.

Die Einhaltung zukünftiger Emissionsgrenzwerte bei möglichst geringem Kraftstoffverbrauch und gleichzeitig hohem Kundenkomfort über die Laufzeit eines Fahrzeuges bzw. eines Verbrennungsmotors stellt besonders hohe Anforderungen an die Regelung der Verbrennungsmotoren. So können unterschiedliche Kraftstoffqualitäten, unterschiedliche Kraftstoffsorten, wie beispielsweise SunFuel, Biokraftstoffe, Naphtha, sowie Toleranzen und Alterungen im Verbrennungsmotor zu erhöhten Schadstoffemissionen sowie schlechterem Kraftstoffverbrauch oder Einbußen im Fahrkomfort führen.

Aus der DE 11 2006 003 029 T5 ist ein System zum Steuern des Zylindergleichgewichts für einen Motor bekannt, bei dem die Kraftstoffabgabe an die einzelnen Zylinder des Motors gesteuert wird. Mit einem Zylinderdrucksensor werden Zylinderdruckinformationen erfasst. Aus diesen Zylinderdruckinformationen werden Zylinderleistungsinformationen bestimmt, die mit Soll-Leistungswerten verglichen werden, um ein Leistungs-Fehlersignal zu erhalten. Weiterhin werden Zylinderverbrennungs-Phasenlageninformationen berechnet, die mit Soll-Phasenlagenwerten verglichen werden, um ein Phasenlagenfehlersignal zu erhalten. Mit diesen Informationen werden Abweichungen zwischen den Zylindern der Brennkraftmaschine kompensiert, indem abgeglichene Kraftstoffmengen zur Abgabe an jeden entsprechenden Motorzylinder und abgeglichene Zeitpunkte für die Abgabe von Kraftstoff in jeden entsprechenden Motorzylinder eingestellt werden. Die Zylinderdrucksignale werden außerdem dazu verwendet, um weitere Variable zu bestimmen, wie etwa Beginn der Verbrennung, Zündverzögerung, Ort des Spitzendruckes oder Verlauf der Wärmefreisetzungsrate mit dem Kurbelwinkel. Die Zylinder werden auf dieselben Einstellpunkte abgeglichen, die durch einen herkömmlichen Kalibrierungsprozess für den Motor erzeugt werden.

Aus der gattungsgemäßen DE 10 2005 058 820 A1 ist ein Verfahren zur Regelung einer Brennkraftmaschine bekannt, wobei zylinderindividuell mindestens eine Größe, die einen jeweiligen Verlauf einer Verbrennung in einem zugehörigen Brennraum charakterisiert, gebildet und abhängig von dieser mindestens einen, den Verbrennungsverlauf charakterisierenden Größe die Regelung von zylinderindividuellen Kraftstoffeinspritzparametern beeinflusst wird. Die einen jeweiligen Verlauf einer Verbrennung in einem zugehörigen Brennraum charakterisierende Größe wird beispielsweise auf Basis eines Brennraumdruckverlaufes gebildet, der mit geeigneten Sensoren zylinderindividuell gemessen wird. Aus dem Druckverlauf wird ein Energieumsatz bestimmt, der charakteristisch für ein Arbeitsspiel der Brennkraftmaschine ist und sich zur Steuerung/Regelung des Verbrennungsvorgangs eignet. Je nach den Vorgaben für den Einspritzvorgang, ob beispielsweise eine oder mehrere Voreinspritzungen stattfinden sollen oder nicht, ergeben sich aufgrund von Längen- und Laufzeitunterschieden, Fertigungs- und sonstiger Toleranzen entlang des Luftpfades unterschiedliche Lagen für den Verbrennungsschwerpunkt von Zylinder zu Zylinder. Durch eine zylinderindividuelle Bestimmung des Verbrennungsschwerpunktes und die hierauf eingestellte zylinderindividuelle Einspritzung wird eine Angleichung einer zylindertypischen Leistung oder eines zylindertypischen Verbrennungsgeräusches über alle Zylinder hinweg vorgenommen, so dass weniger mit Geräuschen verbundene Schwingungen und Vibrationen auftreten und eine gleichmäßige Leistungsabgabe bei weniger Emission erfolgt.

Der Erfindung liegt die Aufgabe zugrunde, ein Verfahren der o.g. Art dahingehend zu verbessern, dass eine Brennkraftmaschine auf einfache Weise mit unterschiedlichen Kraftstoffarten betrieben werden kann.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass jeweils ein Ist-Wert für den Energieinhalt und/oder ein Ist-Wert für die Lage getrennt jeweils für jede Einzelverbrennung innerhalb eines Arbeitszyklus bestimmt wird, wobei die Ist-Werte für den Energieinhalt der Einzelverbrennungen mit jeweiligen Soll-Werten für den Energieinhalt der jeweiligen Einzelverbrennung und der Ist-Wert für die Lage der jeweiligen Einzelverbrennungen innerhalb eines Arbeitszyklus mit jeweiligen Soll-Werten für die Lage der jeweiligen Einzelverbrennung innerhalb eines Arbeitszyklus verglichen werden, wobei in Abhängigkeit von jeweiligen Beträgen von Differenzen zwischen den Ist-Werten und den Soll-Werten vorbestimmte, die jeweilige Einzelverbrennung beeinflussende Parameter derart verändert werden, dass Beträge von Differenzen zwischen den Ist-Werten und den Soll-Werten minimiert werden.

Dies hat den Vorteil, dass unabhängig von unterschiedlichen Kraftstoffqualitäten, Kraftstoffsorten, Alterungen, Umwelteinflüssen oder Toleranzen die Verbrennung in einem Arbeitszylinder in einem Arbeitszyklus, die ggf. mehrere Einzelverbrennungen pro Arbeitstakt umfasst, immer gleich eingestellt wird, so dass die Einflüsse von unterschiedlichen Kraftstoffqualitäten, Kraftstoffsorten, Alterungen, Umwelteinflüssen oder Toleranzen auf Schadstoffemissionen, Kraftstoffverbrauch und Fahrkomfort minimiert werden.

Dadurch, dass jeweils ein Ist-Wert für ein inneres Moment für mindestens einen Arbeitszylinder zylinderindividuell bestimmt wird, wobei jeder Ist-Wert für das innere Moment eines Arbeitszylinders mit einem jeweiligen Soll-Wert für das innere Moment des entsprechenden Arbeitszylinders verglichen wird, wobei in Abhängigkeit von jeweiligen Beträgen von Differenzen zwischen den Ist-Werten und den Soll-Werten vorbestimmte, die jeweilige Einzelverbrennung beeinflussende Parameter derart verändert werden, dass die Beträge von Differenzen zwischen den Ist-Werten und den Soll-Werten minimiert werden, kann das gewünschte Fahrermoment unabhängig von einer Kraftstoffqualität, Toleranzen im Motor, Umwelteinflüssen oder Alterung eingestellt werden.

Eine besonders einfache und genaue Bestimmung der Ist-Werte erzielt man dadurch, dass die Ist-Werte aus einem Verlauf eines Zylinderdruckes mindestens eines Arbeitszylinders bestimmt werden. Hierbei wird der Verlauf des Zylinderdruckes mindestens eines Arbeitszylinders zweckmäßigerweise über den Kurbelwinkel und/oder die Zeit bestimmt.

Eine günstige Beeinflussung des Brennverlaufes erzielt man dadurch, dass die Einzelverbrennungen eine Hauptverbrennung und mindestens eine Zusatzverbrennung umfassen.

Einen besonders günstigen Brennverlauf erzielt man dadurch, dass die mindestens eine Zusatzverbrennung mindestens eine Vorverbrennung und/oder mindestens eine Nachverbrennung umfasst.

Einfach weiter zu verarbeitende Ist-Werte erzielt man dadurch, dass der jeweilige Ist-Wert für die Lage einer Einzelverbrennung innerhalb eines Arbeitszyklus bezüglich der Zeit und/oder des Kurbelwinkels bestimmt wird.

Eine besonders einfache und effektive Beeinflussung der Einzelverbrennung erzielt man dadurch, dass der die jeweilige Einzelverbrennung beeinflussende Parameter eine Kraftstoffeinspritzmenge für die jeweilige Einzelverbrennung, eine Kraftstoffeinspritzdauer für die jeweilige Einzelverbrennung, einen Beginn der Kraftstoffeinspritzung für die jeweilige Einzelverbrennung, ein Ende der Kraftstoffeinspritzung für die jeweilige Einzelverbrennung und/oder einen Druck der Kraftstoffeinspritzung für die jeweilige Einzelverbrennung umfasst.

Eine besonders einfache Regelung erzielt man dadurch, dass die Ist-Werte für einen Arbeitszylinder bestimmt werden und der mindestens eine sich ergebende, die jeweilige Einzelverbrennung beeinflussende Parameter für alle anderen Arbeitszylinder für diese Einzelverbrennung übernommen wird.

Eine sehr genaue und umfassende Regelung der Einzelverbrennungen in einem Arbeitszyklus erzielt man dadurch, dass die Ist-Werte zylinderindividuell bestimmt werden und die die jeweilige Einzelverbrennung beeinflussenden Parameter zylinderindividuell derart bestimmt werden, dass die Beträge von Differenzen zwischen den Ist-Werten und Soll-Werten zylinderindividuell minimiert werden.

Eine Vereinfachung des Verfahrens erzielt man dadurch, dass mindestens zwei Vorverbrennungen, mindestens zwei Nachverbrennungen, mindestens eine Hauptverbrennung mit mindestens einer Vorverbrennung und/oder mindestens eine Hauptverbrennung mit mindestens einer Nachverbrennung zu einer Einzelverbrennung zusammengefasst werden.

Die Erfindung wird im Folgenden näher erläutert.

Bei dem erfindungsgemäßen Verfahren zum Betreiben einer Brennkraftmaschine wird auf die Einzelverbrennungen innerhalb eines Arbeitszyklus abgestellt. Beispielsweise bei einem 4-Takt-Ottomotor oder einer Dieselbrennkraftmaschine umfasst ein Arbeitszyklus in einem Arbeitszylinder einen Ansaugtakt, einen Verdichtungstakt, einen Arbeitstakt und einen Ladungswechseltakt. Diese vier Takte eines thermodynamischen Prozesses werden in jedem Arbeitszylinder zyklisch wiederholt und auf diese Weise leistet die Brennkraftmasche bzw. der Motor mechanische Arbeit. In dem Arbeitstakt wird die Arbeit durch einen Verbrennungsvorgang geleistet, bei dem ein Gemisch aus Kraftstoff, Verbrennungsluft und ggf. rückgeführtem Abgas im Brennraum des Arbeitszylinders gezündet wird. Ein entsprechend erzeugter Zylinderinnendruck wirkt auf einen in axialer Richtung des Arbeitszylinder hin und her bewegbaren Kolben, der über eine Pleuelstange eine Kurbelwelle drehend antreibt. Die Umdrehung der Kurbelwelle definiert einen Kurbelwinkel (KW). Jeder Arbeitszyklus bewegt die Kurbelwelle um einen vorbestimmten Winkel und der Verbrennungsvorgang bzw. der Arbeitstakt erfolgt über einen vorbestimmten Kurbelwinkel. Üblicherweise dreht ein vollständiger Arbeitszyklus die Kurbelwelle um 720°. Alle Vorgänge innerhalb eines Arbeitszyklus werden dementsprechend auf einen Kurbelwinkel zwischen 0° KW und 720° KW bezogen. Dies schafft einen zeitlichen Bezug der Ereignisse eines Arbeitszyklus relativ zueinander.

Die Verbrennung der Einspritzungen kann durch die thermodynamischen Bedingungen des Arbeitsgases oder durch Einbringen von Fremdenergie (Zündung) folgen.

Um die Verbrennung in dem Arbeitstakt zu initialisieren, erfolgt eine Einspritzung von Kraftstoff in den Brennraum eines jeden Arbeitszylinders. Um mehrere Einzelverbrennungen in einem Arbeitstakt eines Arbeitszyklus zu erhalten, erfolgen dementsprechend mehrere Einspritzvorgänge für Kraftstoff, die um entsprechende Kurbelwinkel voneinander beabstandet sind. Beginn und Ende der Einspritzung erfolgen jeweils bei einem bestimmten Kurbelwinkel. Dementsprechend ergeben sich um entsprechende Kurbelwinkel voneinander zeitlich versetzte oder wenigstens teilweise überlappende Einzelverbrennungen innerhalb eines Arbeitszyklus bzw. eines Arbeitstaktes.

Beispielsweise erfolgen innerhalb eines Arbeitszyklus in einem Arbeitszylinder mindestens eine Voreinspritzung, mindestens eine Haupteinspritzung und mindestens eine Nacheinspritzung, die um vorbestimmte Kurbelwinkel voneinander getrennt erfolgen, so dass sich in diesem Arbeitszylinder für jeden Arbeitszyklus dementsprechend mehrere Einzelverbrennungen ergeben, nämlich mindestens eine Vorverbrennung, mindestens eine Hauptverbrennung und mindestens eine Nachverbrennung.

Erfindungsgemäß erfolgt eine Regelung der Verbrennung getrennt für jede der Einzelverbrennungen in einem Arbeitszylinder innerhalb eines Arbeitszyklus. Hierzu werden in Abhängigkeit von einem Soll-Ist-Wert-Vergleich entsprechende Parameter verändert, die die jeweilige Einzelverbrennung beeinflussen, so dass jeweilige Beträge von Differenzen des Soll-Ist-Wert-Vergleichs minimiert werden. So erfolgt beispielsweise jeweils ein Soll-Ist-Wert-Vergleich getrennt für die Vorverbrennung, die Hauptverbrennung und die Nachverbrennung innerhalb eines Arbeitszyklus. In Abhängigkeit von dem Soll-Ist-Wert-Vergleich für die Vorverbrennung wird mindestens ein Parameter verändert, welcher die Vorverbrennung beeinflusst, so dass der Betrag der Differenz in diesem Soll-Ist-Wert-Vergleich für die Vorverbrennung minimiert wird. Gleiches erfolgt jeweils parallel für die Hauptverbrennung und die Nachverbrennung, d.h. in Abhängigkeit von dem Soll-Ist-Wert-Vergleich für die Hauptverbrennung wird mindestens ein Parameter verändert, welcher die Hauptverbrennung beeinflusst, so dass der Betrag der Differenz in diesem Soll-Ist-Wert-Vergleich für die Hauptverbrennung minimiert wird und in Abhängigkeit von dem Soll-Ist-Wert-Vergleich für die Nachverbrennung wird mindestens ein Parameter verändert, welcher die Nachverbrennung beeinflusst, so dass der Betrag der Differenz in diesem Soll-Ist-Wert-Vergleich für die Nachverbrennung minimiert wird. Der mindestens eine Parameter, welcher bzw. welche die Einzelverbrennung beeinflussen, umfassen beispielsweise eine Menge eines eingespritzten Kraftstoffes, einen Kraftstoffeinspritzbeginn, ein Kraftstoffeinspritzende, eine Kraftstoffeinspritzdauer, eine Menge für einen Arbeitszyklus einem Arbeitszylinder rückgeführten Abgases, Zündzeitpunkte und/oder eine Menge für einen Arbeitszyklus einem Arbeitszylinder zugeführter Verbrennungsluft.

Es wird jede Einzelverbrennung eines Zylinders über die Zylinderdruckmessung ausgewertet. Beispielsweise bei einem Dieselmotor gibt es bis zu fünf Einzelverbrennungen pro Zylinder pro Arbeitstakt bzw. Arbeitszyklus, nämlich eine Haupteinspritzung bzw. Hauptverbrennung und bis zu drei Vor- und Nacheinspritzungen bzw. Vor- und Nachverbrennungen in fast allen möglichen Kombinationen. Als Ergebnis dieser Auswertung werden der Energieinhalt (Wärme) und die Winkellage jeder einzelnen Verbrennung bestimmt und einer Regelung zugeführt, die diese Istwerte auf vorher applizierte Sollwerte einregelt.

Diese erfindungsgemäße Einzelverbrennungsregelung funktioniert mit nur einem Zylinderdrucksensor pro Brennkraftmaschine genauso wie mit jeweils einem Zylinderdrucksensor in jedem Arbeitszylinder. In dem ersten Fall werden die Einzelverbrennungen des Zylinders mit Verbrennungsregelung direkt geregelt und die Stellgrößen (Einspritzparameter), die sich daraus ergeben für die anderen Arbeitszylinder übernommen. In einem System mit einem Zylinderdrucksensor in jedem Arbeitszylinder erfolgt die Regelung der Einzelverbrennungen jedes Arbeitszylinders auf Basis der Zylinderdruckmessung des Arbeitszylinders. Außerdem wird neben diesen einzelnen Verbrennungen (Vor-, Haupt- und Nachverbrennungen) der Arbeitszylinder das innere Moment der Arbeitszylinder als weitere Größe mit Hilfe des berechneten indizierten Momentes aus dem Zylinderdrucksignal bestimmt. Eine Regelstrategie ist von der Anzahl der Zylinderdrucksensoren pro Motor abhängig. Über die Regelung dieses indizierten Momentes wird das gewünschte Fahrermoment ebenfalls unabhängig von der Kraftstoffqualität, Toleranzen im Motor, Umwelteinflüssen oder Alterung eingestellt.

Die Ausführungsform dieser Einzelverbrennungsregelung erfolgt mit unterschiedlichen Ausführungsformen. So erfolgt beispielsweise neben der direkten Regelung der Einzelverbrennungen nur eine Regelung der Haupt- und Vorverbrennungen sowie des inneren Momentes eines Arbeitszylinders und die Einspitzmenge der Vorverbrennung der Arbeitszylinder wird nur langsam über eine längere Beobachtungsdauer adaptiert

(Kleinstmengenadaption der Voreinspritzung). Außerdem gibt es weitere Ausführungsformen, bei der beispielsweise eine getrennte Regelung der Hauptverbrennung und der zusammengefassten Nachverbrennungen (die einzelnen Nachverbrennungen werden als eine Nachverbrennung betrachtet) erfolgt. In gleicher Weise werden alternativ auch die Merkmale (Wärmemenge und/oder Verbrennungslage) der Summe aller Vorverbrennungen als Regelkriterien verwendet, so dass das Gesamtpaket der Vorverbrennungen im Betrieb durch Steuerung bzw. Regelung einer oder mehrerer Voreinspritzungen eingestellt wird.

Die Einzelverbrennungsregelung ist ein wichtiger Baustein, um die ,Soll-Verbrennung(en) eines Zylinders unabhängig von den zukünftig variierenden Kraftstoffqualitäten im Markt (Naphtha, Biokraftstoffe, ..) einregeln zu können. So können Dichteunterschiede sowie Heizwertunterschiede und Unterschiede in der Einspritzcharakteristik des Injektors der verschiedenen Kraftstoffe durch die Regelung des indizierten Momentes aller Einspritzungen oder sogar über die Regelung der indizierten Einzelmomente ausgeglichen werden. Außerdem kann ein anderes Verbrennungsverhalten des Kraftstoffes (Cetanzahl, Verdampfungsverhalten) zum Beispiel durch eine Regelung der Einzelverbrennungslage und/oder Einzelverbrennungsenergieumsatzregelung (Wärme) ausgeglichen werden. Dabei werden vor allem unterschiedliche Zündverzüge von Kraftstoffen korrigiert.

Optional kann aus der Messung des Zylinderdrucksignals auf die aktuellen Kraftstoffeigenschaften geschlossen werden. Aus dieser Kraftstofferkennung können dann ergänzend zu der Verbrennungsregelung Eingriffe auf die Sollwerte des Luftsystems (Soll-Ladedruck, Luftmasse, AGR-Rate, ...) erfolgen, wenn das aus thermodynamischer Sicht notwendig erscheint.

## Patentansprüche

1. Verfahren zum Betreiben einer Brennkraftmaschine mit mindestens einem Arbeitszylinder, wobei in mindestens einem Arbeitszylinder in aufeinander folgenden Arbeitszyklen über einen vorbestimmten Kurbelwinkel pro Arbeitszyklus ein thermodynamischer Prozess mit jeweils einem Verbrennungsvorgang in jedem Arbeitszyklus ausgeführt wird, wobei jeder Verbrennungsvorgang mindestens zwei Einzelverbrennungen in einem Arbeitszyklus umfasst, wobei die Einzelverbrennungen zeitlich um einen Kurbelwinkel voneinander versetzt erfolgen, **dadurch gekennzeichnet, dass** jeweils ein Ist-Wert für den Energieinhalt und/oder ein Ist-Wert für die Lage getrennt jeweils für jede Einzelverbrennung innerhalb eines Arbeitszyklus bestimmt wird, wobei die Ist-Werte für den Energieinhalt der Einzelverbrennungen mit jeweiligen Soll-Werten für den Energieinhalt der jeweiligen Einzelverbrennung und der Ist-Wert für die Lage der jeweiligen Einzelverbrennungen innerhalb eines Arbeitszyklus mit jeweiligen Soll-Werten für die Lage der jeweiligen Einzelverbrennung innerhalb eines Arbeitszyklus verglichen werden, wobei in Abhängigkeit von jeweiligen Beträgen von Differenzen zwischen den Ist-Werten und den Soll-Werten vorbestimmte, die jeweilige Einzelverbrennung beeinflussende Parameter derart verändert werden, dass die Beträge von Differenzen zwischen den Ist-Werten und den Soll-Werten minimiert werden.

2. Verfahren nach Anspruch 1, **dadurch gekennzeichnet, dass** jeweils ein Ist-Wert für ein inneres Moment für mindestens einen Arbeitszylinder zylinderindividuell bestimmt wird, wobei jeder Ist-Wert für das innere Moment eines Arbeitszylinders mit einem jeweiligen Soll-Wert für das innere Moment des entsprechenden Arbeitszylinders verglichen wird, wobei in Abhängigkeit von jeweiligen Beträgen von Differenzen zwischen den Ist-Werten und den Soll-Werten vorbestimmte, die jeweilige Einzelverbrennung beeinflussende Parameter derart verändert werden, dass die Beträge von Differenzen zwischen den Ist-Werten und den Soll-Werten minimiert werden.

3. Verfahren nach mindestens einem der vorhergehenden Ansprüche, **dadurch gekennzeichnet, dass** die Ist-Werte aus einem Verlauf eines Zylinderdruckes mindestens eines Arbeitszylinders bestimmt werden.

4. Verfahren nach Anspruch 3, **dadurch gekennzeichnet, dass** der Verlauf des Zylinderdruckes mindestens eines Arbeitszylinders über den Kurbelwinkel und/oder die Zeit bestimmt wird.

5. Verfahren nach mindestens einem der vorhergehenden Ansprüche, **dadurch gekennzeichnet, dass** die Einzelverbrennungen eine Hauptverbrennung und mindestens eine Zusatzverbrennung umfassen.

6. Verfahren nach Anspruch 5, **dadurch gekennzeichnet, dass** die mindestens eine Zusatzverbrennung mindestens eine Vorverbrennung und/oder mindestens eine Nachverbrennung umfasst.

7. Verfahren nach mindestens einem der vorhergehenden Ansprüche, **dadurch gekennzeichnet, dass** der jeweilige Ist-Wert für die Lage einer Einzelverbrennung innerhalb eines Arbeitszyklus bezüglich der Zeit und/oder des Kurbelwinkels bestimmt wird.

8. Verfahren nach mindestens einem der vorhergehenden Ansprüche, **dadurch gekennzeichnet, dass** der die jeweilige Einzelverbrennung beeinflussende Parameter eine Kraftstoffeinspritzmenge für die jeweilige Einzelverbrennung, eine Kraftstoffeinspritzdauer für die jeweilige Einzelverbrennung, einen Beginn der Kraftstoffeinspritzung für die jeweilige Einzelverbrennung, ein Ende der Kraftstoffeinspritzung für die jeweilige Einzelverbrennung, Zündzeitpunkte und/oder einen Druck der Kraftstoffeinspritzung für die jeweilige Einzelverbrennung umfasst.

9. Verfahren nach mindestens einem der vorhergehenden Ansprüche, **dadurch gekennzeichnet, dass** die Ist-Werte für einen Arbeitszylinder bestimmt werden und der mindestens eine sich ergebende, die jeweilige Einzelverbrennung beeinflussende Parameter für alle anderen Arbeitszylinder für diese Einzelverbrennung übernommen wird.

10. Verfahren nach mindestens einem der Ansprüche 1 bis 8, **dadurch gekennzeichnet, dass** die Ist-Werte zylinderindividuell bestimmt werden und die die jeweilige Einzelverbrennung beeinflussenden Parameter zylinderindividuell derart bestimmt werden, dass die Beträge von Differenzen zwischen den Ist-Werten und Soll-Werten zylinderindividuell minimiert werden.

11. Verfahren nach mindestens einem der vorhergehenden Ansprüche, **dadurch gekennzeichnet, dass** mindestens zwei Vorverbrennungen, mindestens zwei Nachverbrennungen, mindestens eine Hauptverbrennung mit mindestens einer Vorverbrennung und/oder mindestens eine Hauptverbrennung mit mindestens einer Nachverbrennung zu einer Einzelverbrennungen zusammengefasst werden.
